# EUROPEAN PATENT SPECIFICATION

(11) **EP 2 589 784 B1**
(45) Date of publication and mention of the grant of the patent: **02.09.2015**
(21) Application number: 12190776.0
(22) Date of filing: 31.10.2012
(51) Int. Cl.: F02M 35/02, F02M 35/04

(54) **Motor vehicle engine with integrated air filter unit**
Kraftfahrzeugmotor mit integrierter Luftfiltereinheit
Moteur de véhicule automobile avec unité de filtre à air intégré

(30) Priority: 02.11.2011 GB 201118916
(43) Date of publication of application: 08.05.2013
(73) Proprietor: Nissan Motor Manufacturing (UK) Ltd., Cranfield Bedfordshire MK43 0DB (GB)
(72) Inventor: GARCIA SANCHEZ, Israel, Barcelona 08040 (ES); DELGADO DEZA, Victor Manuel, Barcelona 08040 (ES); TAKADA, Daisuke, Barcelona 08040 (ES)

(56) References cited:
- EP-A2- 1 182 343
- WO-A1-2007/102497
- DE-A1- 19 626 251
- FR-A1- 2 922 948
- JP-U- H04 104 134

## Description

The present invention relates to a motor vehicle engine comprising an air filter unit; and particularly to an engine for a compact vehicle, where space in the engine bay is limited.

In the design of a compact vehicle, it is commonplace to locate an air cleaner/filter unit on top of the engine; where there is more space compared to other areas in the engine bay; see e.g. JP H04-104,134U; EP1,182,343A2, DE 19,626,251A1, or WO 2007/102,497A1. However, even in this location, space is restricted; and any reduction in height of the air filter unit can result in an increase in engine air intake noise. If the height of the air filter element is reduced, more frequent maintenance is required. Any constriction of the air intake passage below its optimum size can also reduce the engine's efficiency, resulting in a lower power output; and also an increase in fuel consumption, and therefore in CO₂ emissions.

Also located atop a typical compact vehicle engine is a "splash cover", so-called because it prevents fuel from contacting high temperature components (e.g. the exhaust manifold or turbocharger) of the engine, even if a high pressure fuel part leaks fuel. This is an important safety feature, as external combustion could otherwise occur in the unlikely event of fuel component leakage or failure.

The present invention seeks to provide an engine with an air filter unit that will allow for improved performance without compromising the safety aspects of existing engine designs.

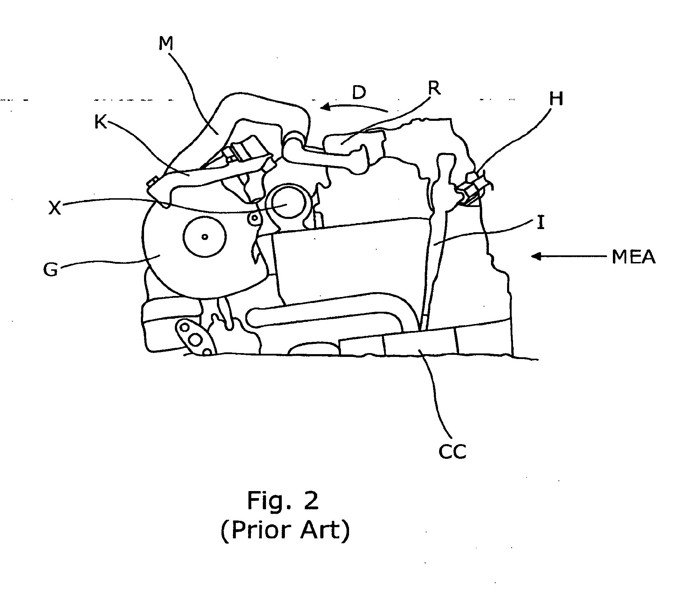

The invention provides a motor vehicle engine comprising an air filter unit, which in turn comprises a housing mounted on the engine, said housing including an air inlet and being capable of accommodating an air filtering means therein, and including a wall extending to contact against a surface of the engine, such that, in use, one part of the engine is isolated from another part of the engine by the wall; **characterized in that** the housing is arranged as an upper boundary to at least two air circulation areas, one on each side of said wall, where air may circulate between the housing and the engine; and in that the wall and an underside of the housing define enclosures that, in use, spatially isolate fuel carrying components of the engine from high temperature components of the engine.
It will be appreciated that although the air filter unit is part of the engine, the dependent wall will contact another part of the engine; which part may be considered, for example, to be a main engine assembly (shown as MEA in Figure 2).

In an example, at least one engine component opposed to said air filter unit housing provides a lower boundary to each said air circulation area.

In an example, each air circulation area has an open outer edge opposed to an inner edge closed by said wall, said open outer edge allowing air to enter and leave the air circulation area. Such open outer edges allow hot air to escape from the confined space under the air filter unit without compromising safety. Each edge of each air circulation area may be considered to be a boundary, whether said edge is open or closed.

In an example, the air filter housing is a separate part to the engine rocker cover. This goes against the current trend to reduce the number of components in engines; but offers greater design flexibility - particularly in the materials used for different components - and also greater flexibility in engine assembly and servicing techniques.

In an example, the edge of the wall contacting the engine surface includes a seal means. In a preferred form, the seal means comprises a rubber seal element. The wall may comprise a sealing skirt. The rubber seal may be fixed to the air filter housing or wall by rubber harpoons.

In an example, at least one enclosure is partial, in that it is open on one side.

In an example, both the underside of the housing and the wall include a seal or barrier means.

In an example, the housing incorporates an integrated splash cover, said splash cover including the wall.

Furthermore, according to the invention, there is provided a method of installing an air filter unit to a motor vehicle engine, wherein the air filter unit includes a housing for accommodating an air filter means and is provided with a barrier wall extending from an underside of said housing to contact a surface of the engine, such that the wall spatially isolates fuel carrying components of the engine from high temperature components of the engine to prevent migration of fuel therebetween; characterized in that the housing is arranged as an upper boundary to air circulation areas, one on each side of said wall, where air may circulate between the housing and the engine.

According to all aspects of the invention, the wall which extends to contact a part of the engine (e.g. a rocker cover) forms a barrier through which leaked fuel, that may originate in fuel carrying components mounted on one part of the engine, cannot contact hot components mounted on another external part of the engine.

An air filter unit according to the invention avoids the need for a separate splash cover component; thus reducing the overall number of parts, and simplifying engine assembly; while maintaining an equivalent safety function. Moreover, dispensing with the conventional splash cover frees up space for a larger (higher or deeper) air filter element to be used, with a corresponding increase in performance (less pressure drop on the air intake to the engine), and reduced noise.

Although the primary purpose of the invention is to make best use of the available space in the engine bay, while reducing the parts count, it is important to avoid problems with heat soak from the rocker cover area into the air filter box; hence the incorporation of air circulation areas, as described above and below.

An air filter unit according to the present invention will be described hereinafter with reference to the accompanying drawings, in which:-
Figures 1 to 3 illustrate various views of an existing compact vehicle engine and its components for general reference;
Figures 4a and 4b illustrate sectional views of an air filter unit according to the invention fitted to an engine;
Figure 5 illustrates a further detailed view of the air filter unit according to the invention; and
Figure 6 illustrates a general view of a seal means attached to the air filter unit casing according to the invention.

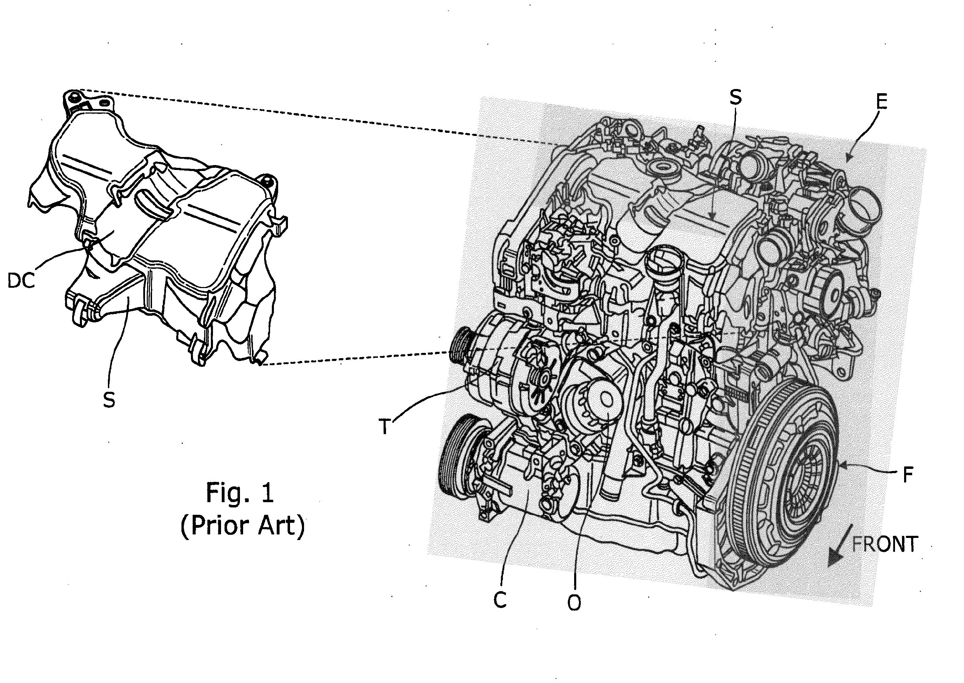

Figure 1 shows an existing compact vehicle engine E that includes a splash cover S (also shown in an enlarged view), which is secured (by clips in several locations) over high-pressure fuel carrying components of the engine. Standard engine components such as a compressor C, an oil filter O, a flywheel F and an alternator T are also shown. The spray cover S is a contoured, moulded component that is intended to prevent any fuel from escaping and contacting hot components. At least one drain channel DC is provided to allow any accumulation of leaked fuel to be directed away from the top of the engine, for example into the sump. The air filter unit is not shown in this Figure.

Figure 2 illustrates a side section view of a partly assembled engine E (or MEA - main engine assembly) without a splash cover fitted. In this scenario, any fuel leaking from a high pressure fuel connection H may possibly migrate in the direction of arrow D over the rocker cover R toward an exhaust manifold X, turbocharger G, or turbocharger heat shield K. A combustion chamber CC to which a fuel injector I delivers fuel is shown for completeness.

It will be apparent that an engine in the form shown by Figure 2 is not optimized in safety terms, because external combustion could result as a consequence of any leaked fuel passing in the particular direction D shown. It must be stressed that the engine configuration in this Figure is incomplete, for the sake of clarity of illustration. Components such as an air filter unit, which are omitted from this view could restrict - but not entirely prevent- passage of leaked fuel.

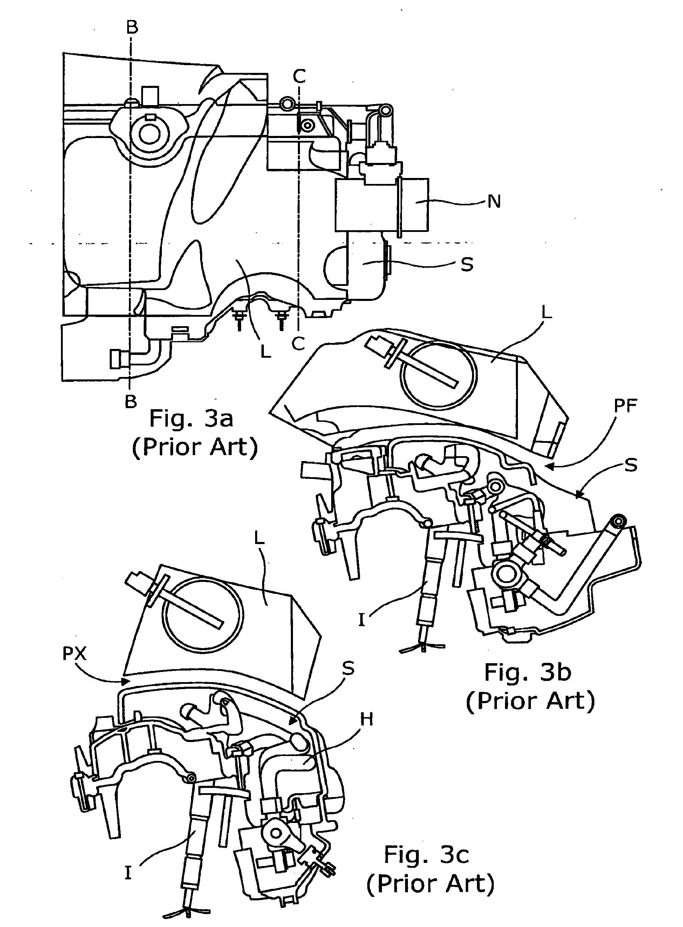

Figure 3a shows a plan view of an existing engine layout where an air cleaner/filter unit L is visible. Furthermore, an air flow meter N measures air flow into the filter, while a splash cover S is seen in place underneath the air filter unit L. The corresponding sectional views along lines B-B (Figure 3b) and C-C (Figure 3c) show that the air filter unit L is mounted with a gap or mechanical clearance PF (at the fuel supply side) and PX (at the exhaust side) between unit L and the splash cover S. The purpose of gaps PF to PX is to keep intake air cool, and to avoid noise and vibration damage that could occur if the air filter unit L rattles against the engine.

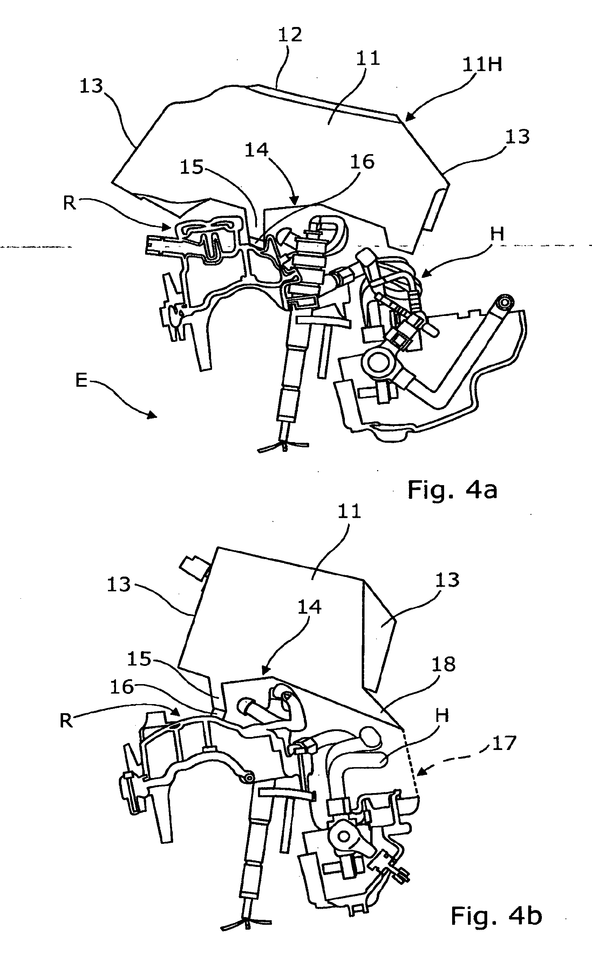

With the state of the art layout of a compact vehicle engine now summarised, the air filter unit of the present invention is described with reference to Figures 4 to 6. Firstly, with reference to Figures 4a and 4b, which are similar sectional views to Figures 3b and 3c, the separate splash cover component S from previous drawings is removed completely; and only an air filter unit 11 is located above the rocker cover R of the engine E.

The air filter unit 11 of the invention is capable of housing an air filter element with a notably greater height, since the separate splash cover component is not present. Filter housing 11H is generally comprised of a topside wall 12 (which may include a hatch to access the replaceable air filter element), side walls 13 and an underside wall 14; which are variously shaped to fit around the surrounding engine components. It will be apparent that the illustrated embodiment is substantially asymmetrical.

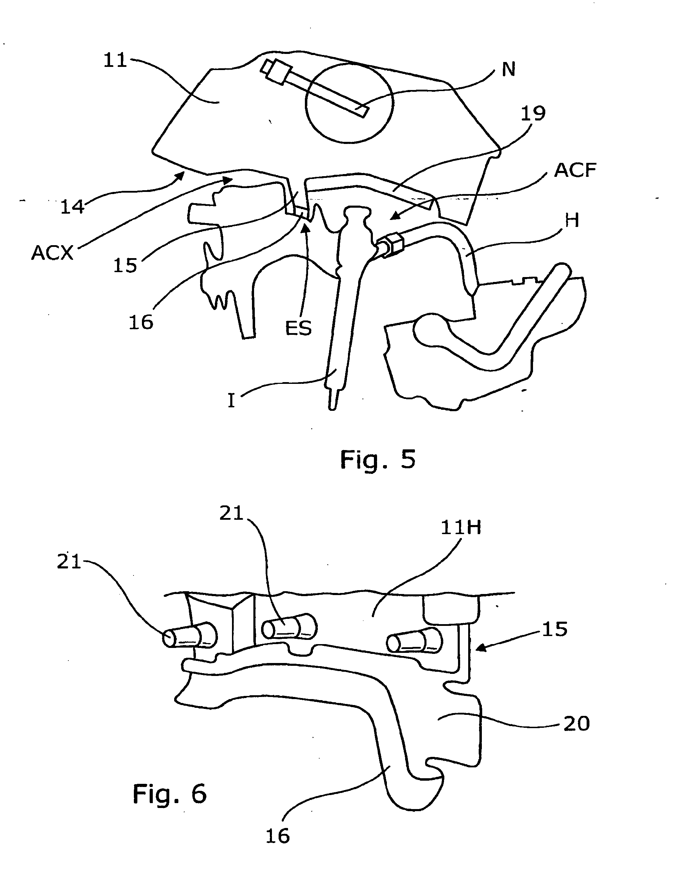

According to the invention, preferably protruding from the underside wall 14, a barrier wall 15 is provided which extends to contact an engine surface (ES, Fig. 5) in the vicinity of the rocker cover R. At the contacting edge is a seal, e.g. of rubber, 16.

Barrier wall 15 may extend from any suitable place on the air filter unit 11. Its purpose is to isolate the high pressure fuel components H on one side of the engine from the high temperature components on the other side of the engine, which are shown in more detail in Figure 2.

The underside wall 14 in conjunction with barrier wall 15 serves to contain any fuel leak, at least in the direction D (toward the left) of Figure 2.

It will be apparent that the barrier wall 15 is an essential safety feature of the air filter unit 11 in connection with its ability to replace a splash cover S of the known type. The air filter need not necessarily have a corresponding solid barrier wall at the opposite side of the engine, where a fuel leak would not contact particularly hot components. A dotted line (17, Fig. 4b) represents a possible barrier wall to contain leaks; however, in other forms, access to the high pressure fuel components H is open. Therefore, only a shroud 18 may be present that deflects any leaked fuel away from the underside of the vehicle bonnet or engine cover (not shown).

Other than seal 16, the walls 13, 14 of air filter unit 11 are not in substantive contact with the engine components below the air filter unit; which helps to minimise vibration damage to the filter. However, air filter unit 11 must be secured in place by suitable means, most preferably a nominal number of bolts, in the conventional way; or by other equivalent fixing means.

Figure 5 illustrates a further optional seal means 19 located on the underside wall 14, above the injector I and high pressure fuel hose H. Such a seal provides an additional barrier against leakage into the air filter unit casing or cavity where the air filter element is located, and also provides added noise and vibration damping properties, along with thermal insulation for the intake air stream. This Figure also shows air circulation areas ACF (on the fuel side) and ACX (on the exhaust side).

Figure 6 illustrates a sealing skirt component 20 that can be connected to the air filter casing 11H by rubber harpoons 21 to form the barrier wall 15 (these harpoons can be omitted if the components are integrated).

The air filter unit of the invention can be manufactured with available tools and materials, most likely injection moulded plastic components that are suitably resistant to aggressive conditions in an engine bay. In general terms, all engine components except the air filter and splash cover can be carried over without modification to an engine incorporating an air filter unit of the invention; however, a drain channel may be pressed or moulded into the engine rocker cover to take over the function of drain channel DC in prior art Figure 1.

In general, it will be apparent that a number of design changes to shape and configuration can be made to the air filter unit without departing from the invention. The innovation is highlighted by recognition of the problem of restricted space in a compact vehicle engine bay (indeed, in most modern vehicles); and by proposal of a solution which will enable a larger (higher/deeper) and hence more efficient air filter to be utilised. At the same time, the solution reduces the number of engine components without a corresponding reduction in safety and functionality.

## Claims

1. A motor vehicle engine (E) comprising an air filter unit (11), which in turn comprises a housing (11H) mounted on the engine, said housing (11H) including an air inlet and being capable of accommodating an air filtering means therein, and including a wall (15) extending to contact against a surface (ES) of the engine (E), such that, in use, one part (H, I) of the engine is isolated from another part (K, X, G) of the engine by the wall (15) ; **characterized in that** the housing (11H) is arranged as an upper boundary to at least two air circulation areas (ACF, ACX), one on each side of said wall (15), where air may circulate between the housing (11H) and the engine (E); and **in that** the wall (15) and an underside (14) of the housing (11H) define enclosures (ACF, ACX) that, in use, spatially isolate fuel carrying components (H, I) of the engine from high temperature components (K, X, G) of the engine.

2. An engine (E) according to claim 1, wherein at least one engine component (R) opposed to said air filter unit housing (11H) provides a lower boundary to each said air circulation area (ACF, ACX).

3. An engine (E) according to claim 1 or claim 2, wherein each air circulation area (ACF, ACX) has an open outer edge (PF, PX) opposed to an inner edge closed by said wall (15), said open outer edge(PF, PX) allowing air to enter and leave the air circulation area (ACF, ACX).

4. An engine (E) according to any preceding claim, wherein the air filter housing (11H) is a separate part to an engine rocker cover (R).

5. An engine (E) according to any preceding claim, wherein the edge of the wall (15) contacting the engine surface (ES) comprises a seal means (16).

6. An engine (E) according to claim 5, wherein the seal means (16) comprises a rubber seal element.

7. An engine (E) according to any one of claims 1 to 4, wherein said wall (15) comprises a sealing skirt (20) that can be connected to the air filter housing (11H) by harpoon type fittings (21).

8. An engine (E) according to any preceding claim, wherein at least one enclosure (ACF, ACX) is partial, in that it is open on one side.

9. An engine (E) according to any one of claims 5 to 8, wherein both the underside (14) of the housing (11H) and the wall (15) include a seal (16) or barrier (19) means.

10. An engine (E) according to any preceding claim, wherein said housing (11H) incorporates an integrated splash cover (14), said splash cover including said wall (15).

11. A method of installing an air filter unit (11) to a motor vehicle engine (E), wherein the air filter unit (11) includes a housing (11H) for accommodating an air filter means, and is provided with a barrier wall (15) extending from an underside (14) of said housing to contact a surface (ES) of the engine (E), such that the wall (15) spatially isolates fuel carrying components of the engine (H, I) from high temperature components of the engine (K, X, G) to prevent migration of fuel therebetween; **characterized in that** the housing (11H) is arranged as an upper boundary to air circulation areas (ACF, ACX), one on each side of said wall (15), where air may circulate between the housing (11H) and the engine (E).

## Patentansprüche

1. Kraftfahrzeugmotor (E), umfassend eine Luftfiltereinheit (11), die wiederum ein am Motor angebrachtes Gehäuse (11 H) umfasst, wobei das Gehäuse (11 H) einen Lufteinlass aufweist und ein Luftfiltermittel in sich aufnehmen kann und eine Wand (15) umfasst, die sich so erstreckt, dass sie eine Oberfläche (ES) des Motors (E) berührt, so dass im Gebrauch ein Teil (H, I) des Motors von einem anderen Teil (K, X, G) des Motors durch die Wand (15) getrennt ist; **dadurch gekennzeichnet, dass** das Gehäuse (11 H) als obere Begrenzung zu wenigstens zwei Luftzirkulationsbereichen (ACF, ACX), jeweils einem an jeder Seite der Wand (15), wo Luft zwischen dem Gehäuse (11 H) und dem Motor (E) zirkulieren kann, angeordnet ist; und dadurch dass die Wand (15) und eine Unterseite (14) des Gehäuses (11 H) einen umschlossenen Raum (ACF, ACX) definieren, der im Gebrauch die Kraftstoff leitenden Komponenten (H, I) des Motors räumlich von den Hochtemperaturkomponenten (K, X, G) des Motors räumlich isoliert.

2. Motor (E) nach Anspruch 1, wobei wenigstens eine Motorkomponente (R) gegenüber dem Luftfiltergehäuse (11 H) eine untere Begrenzung zu jedem der Luftzirkulationsbereiche (ACF, ACX) bereitstellt.

3. Motor (E) nach Anspruch 1 oder Anspruch 2, wobei jeder Luftzirkulationsbereich (ACF, ACX) einen offenen Außenrand (PF, PX) gegenüber einem durch die Wand (15) geschlossenen Innenrand aufweist, wobei der offene Außenrand (PF, PX) ermöglicht, dass Luft in den Luftzirkulationsbereich (ACF, ACX) einströmen und aus diesem austreten kann.

4. Motor (E) nach einem der vorhergehenden Ansprüche, wobei das Luftfiltergehäuse (11 H) ein von einer Motorkipphebelabdeckung (R) getrenntes Teil ist.

5. Motor (E) nach einem der vorhergehenden Ansprüche, wobei der Rand der Wand (15), der die Motoroberfläche (ES) berührt, ein Dichtungsmittel (16) aufweist.

6. Motor (E) nach Anspruch 5, wobei das Dichtungsmittel (16) ein Gummidichtungselement umfasst.

7. Motor (E) nach einem der Ansprüche 1 bis 4, wobei die Wand (15) eine Dichtlippe (20) aufweist, die mittels harpunenartiger Befestigungen (21) an dem Luftfiltergehäuse (11 H) angebracht werden kann.

8. Motor (E) nach einem der vorhergehenden Ansprüche, wobei wenigstens einer der umschlossenen Räume (ACF, ACX) partiell ist, indem er an einer Seite offen ist.

9. Motor (E) nach einem der Ansprüche 5 bis 8, wobei sowohl die Unterseite (14) des Gehäuses (11 H) als auch die Wand (15) eine Dichtung (16) oder ein Absperrmittel (19) aufweisen.

10. Motor (E) nach einem der vorhergehenden Ansprüche, wobei das Gehäuse (11 H) eine fest eingebaute Spritzabdeckung (14) umfasst, wobei die Spritzabdeckung die Wand (15) einschließt.

11. Verfahren zum Einbauen einer Luftfiltereinheit (11) in einen Kraftfahrzeugmotor (E), wobei die Luftfiltereinheit (11) ein Gehäuse (11 H) zum Aufnehmen eines Luftfiltermittels umfasst und mit einer Absperrwand (15) ausgestattet ist, die sich von einer Unterseite (14) des Gehäuses erstreckt, so dass sie eine Oberfläche (ES) des Motors (E) so berührt, dass die Wand (15) die Kraftstoff leitenden Komponenten (H, I) des Motors räumlich von den Hochtemperaturkomponenten (K, X, G) des Motors räumlich isoliert, um ein Durchsickern von Kraftstoff dazwischen zu verhindern; **dadurch gekennzeichnet, dass** das Gehäuse (11 H) als obere Begrenzung zu Luftzirkulationsbereichen (ACF, ACX), jeweils einem an jeder Seite der Wand (15), wo Luft zwischen dem Gehäuse (11 H) und dem Motor (E) zirkulieren kann, angeordnet ist.

## Revendications

1. Moteur de véhicule automobile (E) comprenant une unité de filtre à air (11), qui comprend quant à elle un logement (11 H) monté sur le moteur, ledit logement (11 H) incluant une admission d'air et dans lequel un moyen de filtration d'air peut être logé, et incluant une paroi (15) s'étendant pour venir en contact contre une surface (ES) du moteur (E), dans lequel, en utilisation, une partie (H, I) du moteur soit isolée d'une autre partie (K, X, G) du moteur par la paroi (15) ; **caractérisé en ce que** le logement (11 H) est agencé comme une limite supérieure à au moins deux zones de circulation d'air (ACF, ACX), l'une de chaque côté de ladite paroi (15), où de l'air peut circuler entre le logement (11H) et le moteur (E) ; et **en ce que** la paroi (15) et une sous-face (14) du logement (11 H) définissent des enceintes (ACF, ACX) qui, en utilisation, isolent spatialement des composants transportant du carburant (H, I) du moteur de composants haute température (K, X, G) du moteur.

2. Moteur (E) selon la revendication 1, dans lequel au moins un composant de moteur (R) en regard dudit logement d'unité de filtre à air (11 H) fournit une limite inférieure à chaque dite zone de circulation d'air (ACF, ACX).

3. Moteur (E) selon la revendication 1 ou la revendication 2, dans lequel chaque zone de circulation d'air (ACF, ACX) a un bord externe ouvert (PF, PX) en regard d'un bord interne fermé par ladite paroi (15), ledit bord externe ouvert (PF, PX) permettant à l'air d'entrer et de quitter la zone de circulation d'air (ACF, ACX).

4. Moteur (E) selon l'une quelconque des revendications précédentes, dans lequel le logement de filtre à air (11 H) est une partie séparée d'un cache-culbuteur de moteur (R).

5. Moteur (E) selon l'une quelconque des revendications précédentes, dans lequel le bord de la paroi (15) venant en contact avec la surface de moteur (ES) comprend un moyen d'étanchéité (16).

6. Moteur (E) selon la revendication 5, dans lequel le moyen d'étanchéité (16) comprend un élément d'étanchéité en caoutchouc.

7. Moteur (E) selon l'une quelconque des revendications 1 à 4, dans lequel ladite paroi (15) comprend une jupe d'étanchéité (20) qui peut être raccordée au logement de filtre à air (11 H) par des raccords de type harpon (21).

8. Moteur (E) selon l'une quelconque des revendications précédentes, dans lequel au moins une enceinte (ACF, ACX) est partielle, en ce qu'elle est ouverte sur un côté.

9. Moteur (E) selon l'une quelconque des revendications 5 à 8, dans lequel à la fois la sous-face (14) du logement (11H) et la paroi (15) incluent un moyen d'étanchéité (16) ou de barrière (19).

10. Moteur (E) selon l'une quelconque des revendications précédentes, dans lequel ledit logement (11 H) incorpore une protection contre les projections intégrée (14), ladite protection contre les projections incluant ladite paroi (15).

11. Procédé d'installation d'une unité de filtre à air (11) sur un moteur de véhicule automobile (E), dans lequel l'unité de filtre à air (11) inclut un logement (11 H) destiné à loger un moyen de filtre à air, et est dotée d'une paroi barrière (15) s'étendant à partir d'une sous-face (14) dudit logement pour venir en contact avec une surface (ES) du moteur (E), de sorte que la paroi (15) isole spatialement les composants transportant du carburant du moteur (H, I) de composants haute température du moteur (K, X, G) pour empêcher une migration de carburant entre ceux-ci ; **caractérisé en ce que** le logement (11 H) est agencé comme une limite supérieure à des zones de circulation d'air (ACF, ACX), l'une de chaque côté de ladite paroi (15), où de l'air peut circuler entre le logement (11 H) et le moteur (E).
